# EUROPEAN PATENT SPECIFICATION

(11) **EP 2 632 709 B1**
(45) Date of publication and mention of the grant of the patent: **20.11.2019**
(21) Application number: 11781919.3
(22) Date of filing: 27.10.2011
(51) Int. Cl.: B32B 5/26, B32B 27/12, B32B 27/34, B32B 17/02, B32B 17/10, C08J 5/04, C08L 77/00, C08L 77/02, C08L 77/04, C08L 77/06, C08L 77/08, B29C 70/50, B29C 70/68

(54) **POLYAMIDE COMPOSITE STRUCTURES AND PROCESSES FOR THEIR PREPARATION**
POLYAMIDVERBUNDSTRUKTUREN UND VERFAHREN ZU IHRER HERSTELLUNG
STRUCTURES COMPOSITES EN POLYAMIDE ET LEURS PROCÉDÉS DE PRÉPARATION

(30) Priority: 04.11.2010 US 410108 P; 04.11.2010 US 410104 P; 04.11.2010 US 410100 P; 04.11.2010 US 410093 P; 29.10.2010 US 408166 P
(43) Date of publication of application: 04.09.2013
(73) Proprietor: E. I. du Pont de Nemours and Company, Wilmington, DE 19898 (US)
(72) Inventor: ELIA, Andri, E., Chadds Ford Pennsylvania 19317 (US); KIRCHNER, Olaf, Norbert, CH-1272 Genolier (CH); MESAROS, David, V., Salida Colorado 81201 (US); WAKEMAN, Martyn, Douglas, CH-1196 Gland (CH); YUAN, Shengmei, Newark Delaware 19711 (US)
(74) Representative: Dannenberger, Oliver Andre
(86) International application number: PCT/US2011/057946
(87) International publication number: WO 2012/058346

(56) References cited:
- WO-A1-2011/014754
- FR-A1- 2 501 571
- US-A- 3 920 879
- US-A- 4 255 219
- US-A- 5 731 375
- US-A1- 2010 249 307
- US-A1- 2010 256 262
- US-A1- 2010 279 111
- US-A1- 2011 105 655
- DATABASE WPI Week 199131 Thomson Scientific, London, GB; AN 1991-228356 XP002670582, & KR 900 004 934 B (KOLON CO) 12 July 1990 (1990-07-12)

## Description

### FIELD OF THE INVENTION

The present invention relates to the field of composite structures and processes for their preparation, particularly it relates to the field of polyamide composite structures.

### BACKGROUND OF THE INVENTION

With the aim of replacing metal parts for weight saving and cost reduction while having comparable or superior mechanical performance, structures based on composite materials comprising a polymer matrix containing a fibrous material have been developed. With this growing interest, fiber reinforced plastic composite structures have been designed because of their excellent physical properties resulting from the combination of the fibrous material and the polymer matrix and are used in various end-use applications. Manufacturing techniques have been developed for improving the impregnation of the fibrous material with a polymer matrix to optimize the properties of the composite structure.

In highly demanding applications, such as for example structural parts in automotive and aerospace applications, composite materials are desired due to a unique combination of lightweight, high strength and temperature resistance.

High performance composite structures can be obtained using thermosetting resins or thermoplastic resins as the polymer matrix. Thermoplastic-based composite structures present several advantages over thermoset-based composite structures such as, for example, the fact that they can be post-formed or reprocessed by the application of heat and pressure, that a reduced time is needed to make the composite structures because no curing step is required, and their increased potential for recycling. Indeed, the time consuming chemical reaction of cross-linking for thermosetting resins (curing) is not required during the processing of thermoplastics. Among thermoplastic resins, polyamides are particularly well suited for manufacturing composite structures. Thermoplastic polyamide compositions are desirable for use in a wide range of applications including parts used in automobiles, electrical/electronic parts, household appliances and furniture because of their good mechanical properties, heat resistance, impact resistance and chemical resistance and because they may be conveniently and flexibly molded into a variety of articles of varying degrees of complexity and intricacy.

US 4,255,219 discloses a thermoplastic sheet material useful in forming composites. The disclosed thermoplastic sheet material is made of polyamide 6 and a dibasic carboxylic acid or anhydride or esters thereof and at least one reinforcing mat of long glass fibers encased within said layer.

For making integrated composite structures and to increase the performance of polymers, it is often desired to "overmold" one or more parts made of a polymer onto a portion or all of the surfaces of a composite structure so as to surround or encapsulate said surfaces. Overmolding involves shaping, e.g. by injection molding, a second polymer part directly onto at least a portion of one or more surfaces of the composite structure, to form a two-part composite structure, wherein the two parts are adhered one to the other at least at one interface. The polymer compositions used to impregnate the fibrous material (i.e. the matrix polymer composition) and the polymer compositions used to overmold the impregnated fibrous material (i.e. the overmolding polymer composition) are desired to have good adhesion one to the other, extremely good dimensional stability and retain their mechanical properties under adverse conditions, including thermal cycling, so that the composite structure is protected under operating conditions and thus has an increased lifetime.

Unfortunately, conventional thermoplastic polyamide resin compositions that are used to impregnate one or more fibrous layers and to overmold the one or more impregnated fibrous layers may require excessive heating during stamping, forming, or shaping, which may render their surfaces poor in appearance and in functionality, and/or may show poor adhesion between the overmolded polymer and the surface of the component comprising the fibrous material, i.e. the composite structure. The poor adhesion may result in the formation of cracks at the interface of the overmolded composite structures leading to reduced mechanical properties, premature aging and problems related to delamination and deterioration of the article upon use and time.

In such case of weak adhesion, the interface between the composite structure and the overmolding resin will break first, rendering the overmolded composite structure weaker than either of its components. Therefore, high adhesion strength between the components is highly desirable. However, once the bonding strength is high enough that the interface can sustain the applied load without being the first to break, yet higher mechanical performance of the structure is highly desirable as is needed for the most highly demanding applications. Lower mechanical performance in these most demanding applications may impair the durability and safety of the article upon use and time. Flexural strength, i.e. the maximum flexural stress sustained by the test specimen during a bending test, is commonly used as an indication of a material's ability to bear (or to sustain, or to support) load when flexed. When overmolding a resin composition onto at least a portion of a composite structure, high mechanical performance such as flexural strength of the structure is desired beyond that realized by good bonding strength between the composite structure and the overmolding resin.

There is a need for a thermoplastic polyamide composite structure that is easier to process in forming, shaping, or stamping, that exhibits good mechanical properties, especially flexural strength and having at least a portion of its surface allowing a good adhesion between its surface and an overmolding resin comprising a polyamide resin.

### SUMMARY OF THE INVENTION

Described herein is a composite structure having a surface, which surface has at least a portion made of a surface resin composition, and comprising a fibrous material selected from non-woven structures, textiles, fibrous battings and combinations thereof, said fibrous material being impregnated with a matrix resin composition, wherein the surface resin composition is selected from polyamide compositions comprising a blend of two or more fully aliphatic polyamides having a melting point of at least 250°C and wherein the matrix resin composition is selected from polyamide compositions comprising a one or more fully aliphatic polyamides having a melting point of at least 250°C. Preferably the surface resin composition is selected from polyamide compositions comprising a blend of poly(tetramethylene hexanediamide) (PA46) with one or more fully aliphatic polyamides having a melting point of at least 250°C. Even more preferably, the surface resin composition is selected from polyamide compositions comprising a blend of poly(tetramethylene hexanediamide) (PA46) with poly(hexamethylene hexanediamide) (PA66). Even more preferably, the surface resin composition and the matrix resin composition are selected from polyamide compositions comprising a blend of poly(tetramethylene hexanediamide) (PA46) with poly(hexamethylene hexanediamide) (PA66).

Further described herein is a process for making the composite structure described above. The process for making the composite structure described above comprises a step of i) impregnating with the matrix resin composition the fibrous material, wherein at least a portion of the surface of the composite structure is made of the surface resin composition.

### DETAILED DESCRIPTION

The composite structure according to the present invention has improved impact resistance and flexural strength and allows a good adhesion when a part made of an overmolding resin composition comprising a thermoplastic polyamide is adhered onto at least a portion of the surface of the composite structure. A good impact resistance and flexural strength of the composite structure and a good adhesion between the composite structure and the overmolding resin leads to structures exhibiting good resistance to deterioration and resistance to delamination of the structure with use and time.

As used herein, the term "a" refers to one as well as to at least one and is not an article that necessarily limits its referent noun to the singular.

As used herein, the terms "about" and "at or about" are intended to mean that the amount or value in question may be the value designated or some other value about the same. The phrase is intended to convey that similar values promote equivalent results or effects according to the invention.

As used herein, the term "melting point" in reference to a polyamide refers to the melting point of the pure resin as determined with differential scanning calorimetry (DSC) at a scan rate of 10°C/min in the first heating scan, wherein the melting point is taken at the maximum of the endothermic peak. In customary measurements of melting behavior of blends of polymers, more than one heating scans may be performed on a single specimen, and the second and/or later scans may show a different melting behavior from the first scan. This different melting behavior may be observed as a shift in temperature of the maximum of the endothermic peak and/or as a broadening of the melting peak with possibly more than one peaks, which may be an effect of possible transamidation in the case of more than one polyamides. However, when selecting polyamides in the scope of the current invention, always the peak of the melting endotherm of the first heating scan of the single polyamide is used. As used herein, a scan rate is an increase of temperature per unit time. Sufficient energy must be supplied to maintain a constant scan rate of 10°C/min until a temperature of at least 30°C and preferably at least 50°C above the melting point is reached.

The present invention comprises a fibrous material that is impregnated with a matrix resin composition. At least a portion of the surface of the composite structure is made of a surface resin composition. The matrix resin composition and the surface resin composition may be identical or may be different.

As used herein, the term "a fibrous material being impregnated with a matrix resin composition" means that the matrix resin composition encapsulates and embeds the fibrous material so as to form an interpenetrating network of fibrous material substantially surrounded by the matrix resin composition. For purposes herein, the term "fiber" refers to a macroscopically homogeneous body having a high ratio of length to width across its cross-sectional area perpendicular to its length. The fiber cross section can be any shape, but is typically round. The fibrous material may be in any suitable form known to those skilled in the art and is preferably selected from non-woven structures, textiles, fibrous battings and combinations thereof. Non-woven structures can be selected from random fiber orientation and aligned fibrous structures. Examples of random fiber orientation include without limitation chopped and continuous material which can be in the form of a mat, a needled mat or a felt. Examples of aligned fibrous structures include without limitation unidirectional fiber strands, bidirectional strands, multidirectional strands, multi-axial textiles. Textiles can be selected from woven forms, knits, braids and combinations thereof. The fibrous material can be continuous or discontinuous in form.

Depending on the end-use application of the composite structure and the required mechanical properties, more than one fibrous materials can be used, either by using several same fibrous materials or a combination of different fibrous materials, i.e. the first component described herein may comprise one or more fibrous materials. An example of a combination of different fibrous materials is a combination comprising a non-woven structure such as for example a planar random mat which is placed as a central layer and one or more woven continuous fibrous materials that are placed as outside layers. Such a combination allows an improvement of the processing and thereof of the homogeneity of the first component thus leading to improved mechanical properties. The fibrous material may be made of any suitable material or a mixture of materials provided that the material or the mixture of materials withstand the processing conditions used during impregnation by the matrix resin composition and the surface resin composition.

Preferably, the fibrous material comprises glass fibers, carbon fibers, aramid fibers, graphite fibers, metal fibers, ceramic fibers, natural fibers or mixtures thereof; more preferably, the fibrous material comprises glass fibers, carbon fibers, aramid fibers, natural fibers or mixtures thereof; and still more preferably, the fibrous material comprises glass fibers, carbon fibers and aramid fibers or mixtures thereof. By natural fiber, it is meant any of material of plant origin or of animal origin. When used, the natural fibers are preferably derived from vegetable sources such as for example from seed hair (e.g. cotton), stem plants (e.g. hemp, flax, bamboo; both bast and core fibers), leaf plants (e.g. sisal and abaca), agricultural fibers (e.g., cereal straw, corn cobs, rice hulls and coconut hair) or lignocellulosic fiber (e.g. wood, wood fibers, wood flour, paper and wood-related materials). As mentioned above, more than one fibrous materials can be used. A combination of fibrous materials made of different fibers can be used such as for example a composite structure comprising one or more central layers made of glass fibers or natural fibers and one or more surface layers made of carbon fibers or glass fibers. Preferably, the fibrous material is selected from woven structures, non-woven structures and combinations thereof, wherein said structures are made of glass fibers and wherein the glass fibers are E-glass filaments with a diameter between 8 and 30 microns and preferably with a diameter between 10 to 24 microns.

The fibrous material may further contain a thermoplastic material and the materials described above, for example the fibrous material may be in the form of commingled or co-woven yarns or a fibrous material impregnated with a powder made of a thermoplastic material that is suited to subsequent processing into woven or non-woven forms, or a mixture for use as a uni-directional material or a fibrous material impregnated with oligomers that will polymerize in situ during impregnation.

Preferably, the ratio between the fibrous material and the polymer materials in the first component. i.e. the fibrous material in combination with the matrix resin composition and the surface resin composition, is at least 30 volume percent fibrous material and more preferably between 40 and 60 volume percent fibrous material, the percentage being a volume-percentage based on the total volume of the first component.

The surface resin composition is selected from polyamide compositions comprising a blend of two or more fully aliphatic polyamides having a melting point of at least 250°C. Preferably the surface resin composition is selected from polyamide compositions comprising a blend of poly(tetramethylene hexanediamide) (PA46) with one or more fully aliphatic polyamides having a melting point of at least 250°C. Even more preferably, the surface resin composition is selected from polyamide compositions comprising a blend of poly(tetramethylene hexanediamide) (PA46) with poly(hexamethylene hexanediamide) (PA66).

The matrix resin composition is selected from polyamide compositions comprising one or more fully aliphatic polyamides having a melting point of at least 250°C. Preferably, the matrix resin composition is selected from polyamide compositions comprising a blend of two or more fully aliphatic polyamides having a melting point of at least 250°C. Even more preferably, the matrix resin composition is selected from polyamide compositions comprising a poly(tetramethylene hexanediamide) (PA46) or poly(hexamethylene hexanediamide) (PA66) and mixtures or blends thereof. When the matrix resin composition and the surface resin composition are selected from polyamide compositions comprising a blend of two or more fully aliphatic polyamides having a melting point of at least 250°C, the matrix resin composition and the surface resin composition may be identical or different.

When the matrix resin composition and the surface resin composition are different, it means that their respective blend of polyamides comprises at least one different polyamide, or that their blend of polyamides are the same polyamides but made of different ratios.

Preferably, the surface resin composition and the matrix resin composition comprise a blend of two or more or more fully aliphatic polyamides having a melting point of at least 250°C in a weight ratio from 1:99 to 95:5, more preferably from 15:85 to 85:15. Still more preferably surface resin composition and the matrix resin composition comprises a blend of two or more fully aliphatic polyamides having a melting point of at least 250°C in a weight ratio from 20:80 to 30:70.

Polyamides are condensation products of one or more dicarboxylic acids and one or more diamines, and/or one or more aminocarboxylic acids, and/or ring-opening polymerization products of one or more cyclic lactams.

The two or more fully aliphatic polyamides are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams include caprolactam and laurolactam. In the context of this invention, the term "fully aliphatic polyamide" also refers to copolymers derived from two or more such monomers and blends of two or more fully aliphatic polyamides. Linear, branched, and cyclic monomers may be used.

Carboxylic acid monomers comprised in the fully aliphatic polyamides are aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Preferably, the aliphatic dicarboxylic acids of the fully aliphatic polyamides are selected from adipic acid and dodecanedioic acid. The fully aliphatic polyamides described herein comprise an aliphatic diamine as previously described. Preferably, the one or more diamine monomers of the two or more fully aliphatic polyamide copolymer according to the present invention are selected from tetramethylene diamine and hexamethylene diamine. Suitable examples of fully aliphatic polyamides are poly(hexamethylene adipamide (also called polyamide 6,6; polyamide 66, PA66, or nylon 66), and poly(tetramethylene adipamide) (also called polyamide 4,6, polyamide 46, PA46, or nylon 46), and any copolymers and combinations of the 2, or of either or both with other polyamides, provided that the copolymer has at least 250°C melting point. Suitable polyamides having a melting point of at least 250°C, are polyamides selected from the group poly(hexamethylene hexanediamide) (PA 66), poly(ε-caprolactam/hexamethylene hexanediamide) (PA6/66), (PA6/66/610), poly(ε-caprolactam/hexamethylene hexanediamide/hexamethylene dodecanediamide) (PA6/66/612), poly(ε-caprolactam/hexamethylene hexanediamide/hexamethylene decanediamide/hexamethylene dodecanediamide) (PA6/66/610/612), poly(2-methylpentamethylene hexanediamide/hexamethylene hexanediamide/) (PA D6/66), poly(tetramethylene hexanediamide) (PA46). Preferred examples of fully aliphatic polyamides useful in the polyamide composition of the present invention are PA66 and PA46.

An embodiment of the current invention comprises a matrix resin composition and a surface resin composition comprising a blend of poly(tetramethylene hexanediamide) (PA46) with one or more fully aliphatic polyamides having a melting point of at least 250°C.

A preferred embodiment of the current invention comprise a matrix resin composition comprising a blend of poly(tetramethylene hexanediamide) (PA46) with poly(hexamethylene hexanediamide) (PA66).

Another preferred embodiment of the current invention comprise a matrix resin composition comprising a blend of poly(tetramethylene hexanediamide) (PA46) with poly(hexamethylene hexanediamide) (PA66) in a ratio of 50:50.

The surface resin composition described herein and/or the matrix resin composition may further comprise one or more impact modifiers, one or more heat stabilizers, one or more oxidative stabilizers, one or more ultraviolet light stabilizers, one or more flame retardant agents or mixtures thereof.

The surface resin composition described herein and/or the matrix resin composition may further comprise one or more reinforcing agents such as glass fibers, glass flakes, carbon fibers, carbon nanotubes, mica, wollastonite, calcium carbonate, talc, calcined clay, kaolin, magnesium sulfate, magnesium silicate, boron nitride, barium sulfate, titanium dioxide, sodium aluminum carbonate, barium ferrite, and potassium titanate. When present, the one or more reinforcing agents are present in an amount from 1 to 60 wt-%, preferably from 1 to 40 wt-%, or more preferably from 1 to 35 wt-%, the weight percentages being based on the total weight of the surface resin composition or the matrix resin composition, as the case may be.

As mentioned above, the matrix resin composition and the surface resin composition may be identical or different. With the aim of increasing the impregnation rate of the fibrous material, the melt viscosity of the compositions may be reduced and especially the melt viscosity of the matrix resin composition.

The surface resin composition described herein and/or the matrix resin composition may further comprise modifiers and other ingredients, including, without limitation, flow enhancing additives, lubricants, antistatic agents, coloring agents (including dyes, pigments, carbon black, and the like), nucleating agents, crystallization promoting agents and other processing aids known in the polymer compounding art.

Fillers, modifiers and other ingredients described above may be present in the composition in amounts and in forms well known in the art, including in the form of so-called nano-materials where at least one of the dimensions of the particles is in the range of 1 to 1000 nm.

Preferably, the surface resin compositions and the matrix resin compositions are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

Depending on the end-use application, the composite structure according to the present invention may have any shape. In a preferred embodiment, the composite structure according to the present invention is in the form of a sheet structure. The composite structure may be flexible, in which case it can be rolled.

The composite structure can be made by a process that comprises a step of impregnating the fibrous material with the matrix resin composition, wherein at least a portion of the surface of the composite structure, is made of the surface resin composition. Preferably, the fibrous material is impregnated with the matrix resin by thermopressing. During thermopressing, the fibrous material, the matrix resin composition and the surface resin composition undergo heat and pressure in order to allow the resin compositions to melt and penetrate through the fibrous material and, therefore, to impregnate said fibrous material.

Typically, thermopressing is made at a pressure between 2 and 100 bars and more preferably between 10 and 40 bars and a temperature which is above the melting point of the matrix resin composition and the surface resin composition, preferably at least 20°C above the melting point to enable a proper impregnation. Heating may be done by a variety of means, including contact heating, radiant gas heating, infra red heating, convection or forced convection air heating, induction heating, microwave heating or combinations thereof.

The impregnation pressure can be applied by a static process or by a continuous process (also known as dynamic process), a continuous process being preferred for reasons of speed. Examples of impregnation processes include without limitation vacuum molding, in-mold coating, cross-die extrusion, pultrusion, wire coating type processes, lamination, stamping, diaphragm forming or press-molding, lamination being preferred. During lamination, heat and pressure are applied to the fibrous material, the matrix resin composition and the surface resin composition through opposing pressured rollers or belts in a heating zone, preferably followed by the continued application of pressure in a cooling zone to finalize consolidation and cool the impregnated fibrous material by pressurized means. Examples of lamination techniques include without limation calendering, flatbed lamination and double-belt press lamination. When lamination is used as the impregnating process, preferably a double-belt press is used for lamination.

Should the matrix resin composition and the surface resin composition be different, the surface resin composition always faces the environment of the first component so as to be accessible when the overmolding resin composition is applied onto the composite structure.

The matrix resin composition and the surface resin composition are applied to the fibrous material by conventional means such as for example powder coating, film lamination, extrusion coating or a combination of two or more thereof, provided that the surface resin composition is applied on at least a portion of the surface of the composite structure, which surface is exposed to the environment of the first component.

During a powder coating process, a polymer powder which has been obtained by conventional grinding methods is applied to the fibrous material. The powder may be applied onto the fibrous material by scattering, sprinkling, spraying, thermal or flame spraying, or fluidized bed coating methods. Optionally, the powder coating process may further comprise a step which consists in a post sintering step of the powder on the fibrous material. The matrix resin composition and the surface resin composition are applied to the fibrous material such that at least a portion of the surface of the first component is made of the surface resin composition. Subsequently, thermopressing is performed on the powder coated fibrous material, with an optional preheating of the powder coated fibrous material outside of the pressurized zone.

During film lamination, one or more films made of the matrix resin composition and one or more films made of the surface resin composition which have been obtained by conventional extrusion methods known in the art such as for example blow film extrusion, cast film extrusion and cast sheet extrusion are applied to the fibrous material, e.g. by layering. Subsequently, thermopressing is performed on the assembly comprising the one or more films made of the matrix resin composition and the one or more films made of the surface resin composition and the one or more fibrous materials. In the resulting first component, the films melt and penetrate around the fibrous material as a polymer continuum surrounding the fibrous material.

During extrusion coating, pellets and/or granulates made of the matrix resin composition and pellets and/or granulates made of the surface resin composition are melted and extruded through one or more flat dies so as to form one or more melt curtains which are then applied onto the fibrous material by laying down the one or more melt curtains. Subsequently, thermopressing is performed on the assembly comprising the matrix resin composition, the surface resin composition and the one or more fibrous materials.

Depending on the end-use application, the composite structure obtained under step i) may be shaped into a desired geometry or configuration, or used in sheet form. The process for making a composite structure according to the present invention may further comprise a step ii) of shaping the composite structure, said step arising after the impregnating step i). The step of shaping the composite structure obtained under step i) may be done by compression molding, stamping or any technique using heat and/or pressure. Preferably, pressure is applied by using a hydraulic molding press. During compression molding or stamping, the composite structure is preheated to a temperature above the melt temperature of the surface resin composition and is transferred to a forming or shaping means such as a molding press containing a mold having a cavity of the shape of the final desired geometry whereby it is shaped into a desired configuration and is thereafter removed from the press or the mold after cooling to a temperature below the melt temperature of the surface resin composition and preferably below the melt temperature the matrix resin composition.

The composite structure of the invention is particularly suited to overmolding with a polyamide overmolding resin composition. Any polyamide resin can be used for the overmolding resin composition.

The composite structures according to the present invention may be used in a wide variety of applications such as for example as components for automobiles, trucks, commercial airplanes, aerospace, rail, household appliances, computer hardware, hand held devices, recreation and sports, structural component for machines, structural components for buildings, structural components for photovoltaic equipments or structural components for mechanical devices.
Examples of automotive applications include without limitation seating components and seating frames, engine cover brackets, engine cradles, suspension arms and cradles, spare tire wells, chassis reinforcement, floor pans, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles and fire extinguishers and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, computers.

### EXAMPLES

### Materials

The materials below are comprised in the compositions used in the Examples and Comparative Examples.
**Polyamide 1 (PA1 in Tables):** an aliphatic polyamide, poly(tetramethylene hexanediamide). This polyamide is called PA46 and is commercially available, for example, from DSM corporation. PA1 has a melting point of 275°C to 290°C.
**Polyamide 2 (PA2 in Tables):** an aliphatic polyamide made of adipic acid and 1,6-hexamethylenediamine with a weight average molecular weight of around 32000 Daltons. This polyamide is called PA6,6 and is commercially available, for example, from E. I. du Pont de Nemours and Company. PA2 has a melting point of 260°C to 265°C.

### Preparation of films

The resin compositions used in the Examples (abbreviated as "E" in Tables 1 and 2), and Comparative Examples (abbreviated as "C" in Tables 1 and 2) were prepared by melting or melt-blending the ingredients in a twin-screw extruder at about 300 °C in the case of the matrix resin and the surface resin compositions of E1 and C1 and the surface resin composition of E2 and C3, or at about 280 °C in the case of the matrix resin compositions of E2 and C2 to C4, and the surface resin composition of C2 and C4. The compositions exited the extruder through an adaptor and a film die at the respective temperatures, and then were cast onto a casting drum at about 100 °C into about 125 micron thick film in the case of the matrix resin and the surface resin compositiions of E1 and C1 and the surface resin compositions of E2 and C3, into about 250 micron thick film in the case of the matrix resin and the surface resin compositiions of C2 and the surface resin compositiions of C4, and into about 102 micron thick film in the case of the matrix resin compositions of E2, C3, and C4. The thickness of the films was controlled by the rate of drawing.

### Preparation of the composite structures E1, C1, and C2 of Table 1

Preparation of the composite structures E1, C1, and C2 in Table 1 was accomplished by laminating multiple layers of film of compositions shown in Table 1 and woven continuous glass fiber textile (prepared from E-glass fibers having a diameter of 17 microns, sized with 0.4% of a silane-based sizing agent and a nominal roving tex of 1200 g/km that have been woven into a 2/2 twill (balanced weave) with an areal weight of 600 g/m²) in the following sequence for E1 and C1: 4 layers of film of surface resin composition, one layer of woven continuous glass fiber textile, 4 layers of film of matrix resin composition, one layer of woven continuous glass fiber textile, four layers of film of matrix resin composition, one layer of woven continuous glass fiber textile, and four layers of film of surface resin composition; and in the following sequence for C2: two layers of film of surface resin composition, one layer of woven continuous glass fiber textile, two layers of film of matrix resin composition, one layer of woven continuous glass fiber textile, two layers of film of matrix resin composition, one layer of woven continuous glass fiber textile, and two layers of film of surface resin composition.

The composite structures of table 1 were compression molded by a Dake Press (Grand Haven, Mich) Model 44-225, Pressure range 0 - 25K, with an 8 inch platten. A 6x6" specimen of film and glass textile layers as described above was placed in the mold and heated to a temperature of about 320°C, held at the temperature for 2 minutes without pressure, then pressed at the 320°C temperature with the following pressures: about 4 bar for about 2 minutes, then with about 12 bar for about 2 additional minutes, and then with about 20 bar for about 2 additional minutes; they were subsequently cooled to ambient temperature. The thusly formed composite structures had a thickness of about 1.6 mm, and glass fiber content in the range of 55 to 60 percent of the total weight of the composite structure.

### Preparation of the composite structures E2, C3, and C4 of Table 2

The composite structures E2, C3, and C4 were prepared by first making a laminate by stacking eight layers having a thickness of about 102 microns and made of PA2 and three layers of woven continuous glass fiber textile (E-glass fibers having a diameter of 17 microns, 0.4% of a silane-based sizing and a nominal roving tex of 1200 g/km that have been woven into a 2/2 twill (balanced weave) with an areal weight of 600 g/m²) in the following sequence: two layers made of PA2, one layer of woven continuous glass fiber textile, two layers of PA2, one layer of woven continuous glass fiber textile, two layers of PA2, one layer of woven continuous glass fiber textile and two layers of PA2.

The laminates were prepared using an isobaric double press machine with counter rotating steel belts, both supplied by Held GmbH. The different films enterered the machine from unwinders in the previously defined stacking sequence. The heating zones were about 2000 mm long and the cooling zones were about 1000 mm long. Heating and cooling were maintained without release of pressure. The laminates were prepared with the following conditions: a lamination rate of 1 m/min, a maximum machine temperature of 360°C and laminate pressure of 40 bar. The so-obtained laminates had an overall thickness of about 1.5 mm.

Two layers of films of about 125 micrometers in the case of E2 and C3 and 1 layer of film of about 250 micrometers in the case of C4, made of the respective surface polyamide resin compositions of E2, C3, and C4 as described in Table 2 were applied to a 6x6" specimen of the above described laminate, forming the composite structure. The composite structures were compression molded by a Dake Press (Grand Haven, Mich) Model 44-225 (pressure range 0-25K) with an 8 inch platten at a tempertature of about 320°C, held at the temperature for 2 minutes without pressure, then pressed at the 320°C temperature with the following pressures: about 4 bar for about 2 minutes, then with about 23 bar for about 2 additional minutes, and then with about 46 bar for about 2 additional minutes; they were subsequently cooled to ambient temperature. The composite structures comprising a surface made of the surface polyamide resin compositions of E2 or C3 or C4 described in Table 2, the matrix resin compositions PA2 and the fibrous material had an overall thickness of about 1.6 mm.

### Flexural Strength of Composite Structures E1, C1, and C2 in Table 1

The composite structures E1, C1, and C2 in Table 1 were cut into 1/2" (about 12.7 mm) by 2.5" (about 64 mm) long test specimens (bars) using a MK-377 Tile Saw with a diamond edged blade and water as a lubricant. Flexural Strength was tested on the test specimens via a 3-point bend test. The apparatus and geometry were according to ISO method 178, bending the specimen with a 2.0" support width with the loading edge at the center of the span. The tests were conducted with 1 KN load at 2 mm/min until fracture. The results are shown in Table 1, 428, 408, and 332 MPa for composite structures E1, C1, and C2 respectively, demonstrating the superior flexural strength of a composite structure made of a blend of aliphatic polyamides selected from a group of polyamides of melting points higher than 250 °C, when compared to a composite structure made of a single polyamide from the same group of polyamides.

### Bond Strength of Composite Structures E2, C3, and C4 of Table 2

When composite structures E2, C3, and C4 were over-injection molded with an overmolding resin composition comprising PA2 and 50 weight percent of glass fibers (percentage of the total composition of the overmolding resin), the bond strengths were respectively 61,20, and 38 MPa, demonstrating the superior ability of composite structures comprising a surface resin composition made of a blend of 2 or more polyamides selected from group of aliphatic polyamides of melting points higher than 250 °C to form strong bond strength to an overmolding resin, when compared to composite structures comprising a surface resin composition made of a single polyamide from the same group.

The over-injection molding was accomplished by over-injecting 1.8 mm of the overmolding resin composition onto the composite structures obtained as described above. The composite structures E2, C3, and C4 comprising a surface made of the surface resin compositions listed in Table 2, the matrix resin compositions listed in Table 2 and the fibrous material described above were cut into 5x5" (about 127 mm x 127 mm) specimens and placed into a heating chamber for 3 min at 210°C. Then the composite structures were quickly transferred with a robot arm into a mold cavity of an Engel vertical press and were over injection molded with the overmolding resin composition comprising PA2 and 50 weight percent of glass fibers (percentage of the total composition of the overmolding resin) by an Engel molding machine. The transfer time from leaving the heating chamber to contact with the overmolding resin was 9 sec. The mold was oil heated at 120°C. The injection machine was set at 280°C.

The 5x5" specimens of the overmolded composite structures comprising E2, C3, and C4 prepared as described above, were cut into 1/2" (about 12.7 mm) x 3" (about 76 mm) test specimens, and were notched by cutting the overmolded part up to the interface of the overmolded part and the composite structure. The notch was made through the width at about the middle (lengthwise) of the test specimen. The bond strength of the overmolded resin composition to the composite structure was measured on the notched test specimens via a 3 point bend method, modified ISO-178. The apparatus and geometry were according to ISO method 178, bending the specimen with a 2.0" (about 51 mm) support width with the loading edge at the center of the span. The over-molded part of the specimen was on the tensile side (outer span) resting on the two side supports (at 2" (about 51 mm) apart), while indenting with the single support (the load) on the compression side (inner span) on the composite structure of the specimen. In this test geometry, the notch in the specimens was down (tensile side). The notch was placed ¼" off center (¼" away from the load). The tests were conducted at 2 mm/min with a 1 KN load. The test was run until a separation or fracture between the two parts of the specimen (delamination) was seen. The stress at that point was recorded.

**Table 1**

| | E1 | C1 | C2 |
|---|---|---|---|
| Matrix Resin Composition | | | |
| PA1 | 50 | 100 | |
| PA2 | 50 | | 100 |

| Surface Resin Composition | | | |
|---|---|---|---|
| PA1 | 50 | 100 | |
| PA2 | 50 | | 100 |

| ISO-178 3 Point Flex | | | |
|---|---|---|---|
| Flexural Strength at Break (Mpa) | 423 | 408 | 332 |

**Table 2**

| | E2 | C3 | C4 |
|---|---|---|---|
| Matrix Resin Composition | | | |
| PA1 | | | |
| PA2 | 100 | 100 | 100 |

| Surface Resin Composition | | | |
|---|---|---|---|
| PA1 | 50 | 100 | |
| PA2 | 50 | | 100 |

## Claims

1. A composite structure having a surface, which surface has at least a portion made of a surface resin composition, and comprising a fibrous material selected from non-woven structures, textiles, fibrous battings and combinations thereof, said fibrous material being impregnated with a matrix resin composition, wherein the surface resin composition is selected from polyamide compositions comprising a blend of two or more fully aliphatic polyamides having a melting point of at least 250°C and wherein the matrix resin composition is selected from polyamide compositions comprising one or more fully aliphatic polyamides having a melting point of at least 250°C.

2. The composite structure of claim 1 wherein the surface resin composition is selected from polyamide compositions comprising a blend of poly(tetramethylene hexanediamide) (PA46) with one or more fully aliphatic polyamides having a melting point of at least 250°C.

3. The composite structure of claims 1 or 2 wherein the surface resin composition and the matrix resin composition are selected from polyamide compositions comprising a blend of poly(tetramethylene hexanediamide) (PA46) with poly(hexamethylene hexanediamide) (PA66).

4. The composite structure according to any of the preceding claims, wherein the fibrous material is made of glass fibers, carbon fibers, aramid fibers, natural fibers or mixtures thereof.

5. The composite structure according to any of the preceding claims, wherein the fibrous material is made of glass fibers.

6. The composite structure according to any of the preceding claims wherein the fibrous material is from 30 volume percent to 60 volume percent of the composite structure.

7. The composite structure according to any of the preceding claims further comprising one or more additives selected from the group consisting of heat stabilizers, oxidative stabilizers, reinforcing agents and flame retardants or combination thereof.

8. The composite structure according to any of the preceding claims wherein the two or more fully aliphatic polyamides are selected from the group consisting of PA 66, PA6/66, PA6/66/610, PA6/66/612, PA6/66/610/612, PA D6/66, PA46.

9. The composite structure according to any of the preceding claims, wherein the weight ratio of the two or more polyamides of the matrix polyamide composition and of the surface polyamide composition is between from 1:99 to 95:5.

10. The composite structure according to any of the preceding claims, wherein the weight ratio of the one or more polyamides of the matrix polyamide composition and of the surface resin composition is from 20:80 to 30:70.

11. The composite structure according to any of the preceding claims, wherein the matrix resin composition is selected from polyamide compositions comprising a blend of two or more fully aliphatic polyamides having a melting point of at least 250°C, and wherein the matrix resin composition and the surface resin composition are different in that their respective blend of polyamides comprises at least one different polyamide, or that their blend of polyamides are the same polyamides but made of different ratios.

12. The composite structure according to any preceding claim in the form of a component for automobiles, trucks, commercial airplanes, aerospace, rail, household appliances, computer hardware, hand held devices, recreation and sports, structural component for machines, structural components for buildings, structural components for photovoltaic equipments or structural components for mechanical devices.

13. A process for making a composite structure having a surface, said process comprises a step of:
i) impregnating with a matrix resin composition a fibrous material selected from non-woven structures, textiles, fibrous battings and combinations thereof, said fibrous material being impregnated with a matrix resin composition,
wherein at least a portion of the surface of the composite structure is made of a surface resin composition, and
wherein the surface resin composition is selected from polyamide compositions comprising a blend of two or more fully aliphatic polyamides having a melting point of at least 250°C and wherein the matrix resin composition is selected from polyamide compositions comprising a one or more fully aliphatic polyamides having a melting point of at least 250°C.

14. The process of claim 13 wherein the surface resin composition and the matrix resin composition are selected from polyamide compositions comprising a blend of poly(tetramethylene hexanediamide) (PA46) with one or more fully aliphatic polyamides having a melting point of at least 250°C.

15. The process of claims 13 or 14 wherein the surface resin composition and the matrix resin composition are selected from polyamide compositions comprising a blend of poly(tetramethylene hexanediamide) (PA46) with poly(hexamethylene hexanediamide) (PA66).

## Patentansprüche

1. Verbundstruktur, die eine Oberfläche aufweist, welche Oberfläche mindestens einen Teil aufweist, der aus einer Oberflächenharzzusammensetzung hergestellt ist, und die ein faseriges Material umfasst ausgewählt unter Vliesstoffstrukturen, Textilien, faserigen Wattierungen und Kombinationen davon, wobei das faserigen Material mit einer Matrixharzzusammensetzung imprägniert wird, wobei die Oberflächenharzzusammensetzung aus Polyamidzusammensetzungen ausgewählt wird, die eine Mischung von zwei voll aliphatischen Polyamiden oder mehr umfasst, die einen Schmelzpunkt von mindestens 250 °C aufweisen und wobei die Matrixharzzusammensetzung aus Polyamidzusammensetzungen ausgewählt wird, die ein voll aliphatisches Polyamid oder mehr umfassen, die einen Schmelzpunkt von mindestens 250 °C aufweisen.

2. Verbundstruktur nach Anspruch 1, wobei die Oberflächenharzzusammensetzung aus Polyamidzusammensetzungen ausgewählt wird, die eine Mischung von Poly(tetramethylenhexandiamid) (PA46) mit einem voll aliphatischen Polyamid oder mehr umfassen, die einen Schmelzpunkt von mindestens 250 °C aufweisen.

3. Verbundstruktur nach den Ansprüchen 1 oder 2, wobei die Oberflächenharzzusammensetzung und die Matrixharzzusammensetzung aus Polyamidzusammensetzungen ausgewählt werden, die eine Mischung von Poly(teramethylenhexandiamid) (PA46) mit Poly(hexamethylenhexandiamid) (PA66) umfassen.

4. Verbundstruktur nach irgendeinem der vorhergehenden Ansprüche, wobei das faserige Material aus Glasfasern, Kohlefasern, Aramidfasern, Naturfasern und Mischungen davon hergestellt wird.

5. Verbundstruktur nach irgendeinem der vorhergehenden Ansprüche, wobei das faserige Material aus Glasfasern hergestellt wird.

6. Verbundstruktur nach irgendeinem der vorhergehenden Ansprüche, wobei das faserige Material 30 Volumenprozent bis 60 Volumenprozent der Verbundstruktur bildet.

7. Verbundstruktur nach irgendeinem der vorhergehenden Ansprüche, die ferner ein Zusatzmittel oder mehr umfasst ausgewählt aus der Gruppe bestehend aus Wärmestabilisatoren, oxidativen Stabilisatoren, Verstärkungsmitteln und Flammenverzögerungsmitteln oder Kombinationen davon.

8. Verbundstruktur nach irgendeinem der vorhergehenden Ansprüche, wobei die zwei voll aliphatischen Polyamide oder mehr aus der Gruppe ausgewählt werden bestehend aus PA 66, PA6/66, PA6/66/610, PA6/66/612, PA6/66/610/612, PA D6/66, PA46.

9. Verbundstruktur nach irgendeinem der vorhergehenden Ansprüche, wobei das Gewichtsverhältnis der zwei Polyamide oder mehr der Matrixpolyamidzusammensetzung und der Oberflächenpolyamidzusammensetzung zwischen 1:99 und 95:5 liegt.

10. Verbundstruktur nach irgendeinem der vorhergehenden Ansprüche, wobei das Gewichtsverhältnis des einen oder der mehreren Polyamide der Matrixpolyamidzusammensetzung und der Oberflächenharzzusammensetzung 20:80 bis 30:70 beträgt.

11. Verbundstruktur nach irgendeinem der vorhergehenden Ansprüche, wobei die Matrixharzzusammensetzung aus Polyamidzusammensetzungen ausgewählt wird, die eine Mischung von zwei voll aliphatischen Polyamiden oder mehr umfassen, die einen Schmelzpunkt von mindestens 250 °C aufweisen, und wobei die Matrixharzzusammensetzung und die Oberflächenharzzusammensetzung dadurch verschieden sind, dass ihre jeweilige Mischung von Polyamiden mindestens ein anderes Polyamid umfasst oder dass ihre Mischung von Polyamiden aus denselben Polyamiden besteht, jedoch aus verschiedenen Verhältnissen hergestellt ist.

12. Verbundstruktur nach irgendeinem vorhergehenden Anspruch in Form einer Komponente für Fahrzeuge, Lastwagen, Verkehrsluftfahrzeuge, Luft- und Raumfahrt, Eisenbahn, Haushaltgeräte, Computer-Hardware, Handheld-Geräte, Erholungs- und Sportartikel, Bauteile für Maschinen, Bauteile für Gebäude, Bauteile für photovoltaische Geräte oder Bauteile für mechanische Vorrichtungen.

13. Verfahren zum Herstellen einer Verbundstruktur, die eine Oberfläche aufweist, wobei das Verfahren einen Schritt umfasst des:
i) Imprägnierens, mit einer Matrixharzzusammensetzung, eines faserigen Materials ausgewählt unter Vliesstoffstrukturen, Textilien, faserigen Wattierungen und Kombinationen davon, wobei das faserige Material mit einer Matrixharzzusammensetzung imprägniert wird,
wobei mindestens ein Teil der Oberfläche der Verbundstruktur aus einer Oberflächenharzzusammensetzung hergestellt ist und
wobei die Oberflächenharzzusammensetzung aus Polyamidzusammensetzungen ausgewählt wird, die eine Mischung von zwei voll aliphatischen Polyamiden oder mehr umfassen, die einen Schmelzpunkt von mindestens 250 °C aufweisen, und wobei die Matrixharzzusammensetzung aus Polyamidzusammensetzungen ausgewählt wird, die ein voll aliphatisches Polyamid oder mehr umfassen, die einen Schmelzpunkt von mindestens 250 °C aufweisen.

14. Verfahren nach Anspruch 13, wobei die Oberflächenharzzusammensetzung und die Matrixharzzusammensetzung aus Polyamidzusammensetzungen ausgewählt werden, die eine Mischung von Poly(tetramethylenhexandiamid) (PA46) mit einem voll aliphatischen Polyamid oder mehr umfassen, die einen Schmelzpunkt von mindestens 250 °C aufweisen.

15. Verfahren nach den Ansprüchen 13 oder 14, wobei die Oberflächenharzzusammensetzung und die Matrixharzzusammensetzung aus Polyamidzusammensetzungen ausgewählt werden, die eine Mischung von Poly(tetramethylenhexandiamid) (PA46) mit Poly(hexamethylenhexandiamid) (PA66) umfassen.

## Revendications

1. Structure composite ayant une surface, laquelle surface présente au moins une partie constituée d'une composition de résine de surface, et comprend un matériau fibreux sélectionné parmi les structures non-tissées, les textiles, les mats fibreux et leurs combinaisons, ledit matériau fibreux étant imprégné d'une composition de résine formant matrice, la composition de résine de surface étant sélectionnée parmi les compositions de polyamide comprenant un mélange de deux polyamides entièrement aliphatiques ou plus ayant un point de fusion d'au moins 250°C et la composition de résine formant matrice étant sélectionnée parmi les compositions de polyamide comprenant un polyamide entièrement aliphatique ou plus ayant un point de fusion d'au moins 250°C.

2. Structure composite selon la revendication 1 dans laquelle la composition de résine de surface est sélectionnée parmi les compositions de polyamide comprenant un mélange de poly(tétraméthylène hexanediamide) (PA46) avec un polyamide entièrement aliphatique ou plus ayant un point de fusion d'au moins 250°C.

3. Structure composite selon les revendications 1 ou 2 dans laquelle la composition de résine de surface et la composition de résine formant matrice sont sélectionnées parmi les compositions de polyamide comprenant un mélange de poly(tétraméthylène hexanediamide) (PA46) avec du poly(hexaméthylène hexanediamide) (PA66).

4. Structure composite selon l'une quelconque des revendications précédentes, dans laquelle le matériau fibreux est constitué de fibres de verre, de fibres de carbone, de fibres d'aramide, de fibres d'origine naturelle ou de leurs mélanges.

5. Structure composite selon l'une quelconque des revendications précédentes, dans laquelle le matériau fibreux est constitué de fibres de verre.

6. Structure composite selon l'une quelconque des revendications précédentes dans laquelle le matériau fibreux représente de 30 pour cent en volume à 60 pour cent en volume de la structure composite.

7. Structure composite selon l'une quelconque des revendications précédentes comprenant en outre un ou plusieurs additifs sélectionnés dans le groupe constitué des agents stabilisants thermiques, des agents de stabilisation de l'oxydation, des agents de renfort et des agents résistant à l'inflammabilité ou leurs combinaisons.

8. Structure composite selon l'une quelconque des revendications précédentes dans laquelle les deux polyamides entièrement aliphatiques ou plus sont sélectionnés dans le groupe constitué du PA 66, PA6/66, PA6/66/610, PA6/66/612, PA6/66/610/612, PA D6/66, PA46.

9. Structure composite selon l'une quelconque des revendications précédentes, dans laquelle le rapport en poids des deux polyamides ou plus de la composition de polyamide formant matrice et de la composition de polyamide de surface est compris entre 1:99 à 95:5.

10. Structure composite selon l'une quelconque des revendications précédentes, dans laquelle le rapport en poids du un ou des plusieurs polyamides de la composition de polyamide formant matrice et de la composition de résine de surface est de 20:80 à 30:70.

11. Structure composite selon l'une quelconque des revendications précédentes, dans laquelle la composition de résine formant matrice est sélectionnée parmi les compositions de polyamide comprenant un mélange de deux polyamides entièrement aliphatiques ou plus ayant un point de fusion d'au moins 250°C, et dans laquelle la composition de résine formant matrice et la composition de résine de surface sont différentes en ce que leur mélange respectif de polyamides comprend au moins un polyamide différent, ou que leur mélange de polyamides sont les mêmes polyamides mais constitué de différents rapports.

12. Structure composite selon l'une quelconque revendication précédente sous la forme d'un composant pour automobiles, camions, aéronefs commerciaux, engin aérospatial, engin ferroviaire, appareils domestiques, ordinateur, dispositifs portables, composants pour les loisirs et les sports, composant structurel pour les machines, composants structurels pour les bâtiments, composants structurels pour les équipements photovoltaïques ou composants structurels pour les dispositifs mécaniques.

13. Procédé de fabrication d'une structure composite ayant une surface, ledit procédé comprenant une étape de:
i) imprégnation avec une composition de résine formant matrice d'un matériau fibreux sélectionné parmi les structures non-tissées, les textiles, les mats fibreux et leurs combinaisons, ledit matériau fibreux étant imprégné d'une composition de résine formant matrice,
où au moins une partie de la surface de la structure composite est constituée d'une composition de résine de surface, et
où la composition de résine de surface est sélectionnée parmi les compositions de polyamide comprenant un mélange de deux polyamides entièrement aliphatiques ou plus ayant un point de fusion d'au moins 250°C et où la composition de résine formant matrice est sélectionnée parmi les compositions de polyamide comprenant un polyamide entièrement aliphatique ou plus ayant un point de fusion d'au moins 250°C.

14. Procédé selon la revendication 13 dans lequel la composition de résine de surface et la composition de résine formant matrice sont sélectionnées parmi les compositions de polyamide comprenant un mélange de poly(tétraméthylène hexanediamide) (PA46) avec un polyamide entièrement aliphatique ou plus ayant un point de fusion d'au moins 250°C.

15. Procédé selon les revendications 13 ou 14 dans lequel la composition de résine de surface et la composition de résine formant matrice sont sélectionnées parmi les compositions de polyamide comprenant un mélange de poly(tétraméthylène hexanediamide) (PA46) avec du poly(hexaméthylène hexanediamide) (PA66).
